(19) Europäisches Patentamt
European Patent Office
Office européen des brevets

(11) **EP 1 875 632 B1**

(12) **EUROPEAN PATENT SPECIFICATION**

(45) Date of publication and mention
of the grant of the patent:
**27.06.2012 Bulletin 2012/26**

(21) Application number: **06751425.7**

(22) Date of filing: **24.04.2006**

(51) Int Cl.:
*H01Q 3/26* (2006.01)     *H04B 7/06* (2006.01)
*H04B 17/00* (2006.01)

(86) International application number:
**PCT/US2006/015726**

(87) International publication number:
**WO 2006/116453 (02.11.2006 Gazette 2006/44)**

(54) **ANTENNA ARRAY CALIBRATION FOR WIRELESS COMMUNICATION SYSTEMS**

ANTENNENGRUPPENKALIBRIERUNG FÜR DRAHTLOSE KOMMUNIKATIONSSYSTEME

CALIBRAGE DE RESEAU D'ANTENNES POUR SYSTEMES DE COMMUNICATION SANS FIL

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.04.2005 US 674190 P**
**16.06.2005 US 691458 P**
**02.11.2005 US 733020 P**

(43) Date of publication of application:
**09.01.2008 Bulletin 2008/02**

(73) Proprietor: **QUALCOMM INCORPORATED**
**San Diego, CA 92121 (US)**

(72) Inventors:
• **NAGUIB, Ayman Fawzy**
**Cupertino, California 95014 (US)**
• **AGRAWAL, Avneesh**
**San Diego, California 92127 (US)**
• **GOROKHOV, Alexei**
**San Diego, California 92130 (US)**

(74) Representative: **Heselberger, Johannes**
**Bardehle Pagenberg**
**Prinzregentenplatz 7**
**81675 München (DE)**

(56) References cited:
**EP-A- 0 654 915     WO-A-99/57820**

**Description**

This application claims benefit under 35 U.S.C. [section] 119(e) from U.S. Provisional Patent Application Serial No. 60/674,190 entitled "ANTENNA ARRAY CALIBRATION FOR WIRELESS COMMUNICATION SYSTEM", filed April 22, 2005, U.S. Provisional Patent Application Serial No. 60/691,458 entitled "A METHOD FOR OVER THE AIR CALIBRATION OF TDD MULTI ANTENNA SYSTEMS", filed June 16, 2005, and U.S. Provisional Patent Application Serial No. 60/733,020 entitled "ANTENNA ARRAY CALIBRATION FOR WIRELESS COMMUNICATION SYSTEMS", filed November 2, 2005.

BACKGROUND

I. Field

The following description relates generally to wireless communications, and, amongst other things, to over-the-air calibrating an antenna array.

II. Background

Wireless networking systems have become a prevalent means by which a majority of people worldwide has come to communicate. Wireless communication devices have become smaller and more powerful in order to meet consumer needs and to improve portability and convenience. The increase in processing power in mobile devices such as cellular telephones has lead to an increase in demands on wireless network transmission systems. Such systems typically are not as easily updated as the cellular devices that communicate there over. As mobile device capabilities expand, it can be difficult to maintain an older wireless network system in a manner that facilitates fully exploiting new and improved wireless device capabilities.

More particularly, frequency division based techniques typically separate the spectrum into distinct channels by splitting it into uniform chunks of bandwidth, for example, division of the frequency band allocated for wireless cellular telephone communication can be split into channels, each of which can carry a voice conversation or, with digital service, carry digital data. Each channel can be assigned to only one user at a time. One commonly utilized variant is an orthogonal frequency division technique that effectively partitions the overall system bandwidth into multiple orthogonal subcarriers. These subcarriers are also referred to as tones, carriers, bins, and/or frequency channels. With time division based techniques, a band is split time-wise into sequential time slices or time slots. Each user of a channel may be provided with a time slice for transmitting and receiving information in a round-robin manner. For example, at any given time $t$, a user is provided access to the channel for a short burst. Then, access switches to another user who is provided with a short burst of time for transmitting and receiving information. The cycle of "taking turns" continues, and eventually each user is provided with multiple transmission and reception bursts.

Code division based techniques typically transmit data over a number of frequencies available at any time in a range. In general, data is digitized and spread over available bandwidth, wherein multiple users can be overlaid on the channel and respective users can be assigned a unique sequence code. Users can transmit in the same wide-band chunk of spectrum, wherein each user's signal is spread over the entire bandwidth by its respective unique spreading code. This technique can provide for sharing, wherein one or more users can concurrently transmit and receive. Such sharing can be achieved through spread spectrum digital modulation, wherein a user's stream of bits is encoded and spread across a very wide channel in a pseudo-random fashion. The receiver is designed to recognize the associated unique sequence code and undo the randomization in order to collect the bits for a particular user in a coherent manner.

A typical wireless communication network (*e.g.*, employing frequency, time, and code division techniques) includes one or more base stations that provide a coverage area and one or more mobile (*e.g.*, wireless) terminals that can transmit and receive data within the coverage area. A typical base station can simultaneously transmit multiple data streams for broadcast, multicast, and/or unicast services, wherein a data stream is a stream of data that can be of independent reception interest to a mobile terminal. A mobile terminal within the coverage area of that base station can be interested in receiving one, more than one or all the data streams carried by the composite stream. Likewise, a mobile terminal can transmit data to the base station or another mobile terminal. Such communication between base station and mobile terminal or between mobile terminals can be degraded due to channel variations and/or interference power variations. For example, the aforementioned variations can affect base station scheduling, power control and/or rate prediction for one or more mobile terminals.

When antenna arrays and/or base stations are employed in conjunction with a time domain duplexed (TDD) channel transmission technique, very large gains can be realized. A key assumption in realizing these gains is that due to the TDD nature of the transmission and reception, both the forward link (FL) and reverse link (RL) observe similar physical propagation channels corresponding to a common carrier frequency. Therefore, similar to the method described in document WO 99/57820 A1, not both downlink and uplink signatures are determined. For more than one subscriber unit, the downlink signatures are determined and a calibration factor is calculated as a function of signatures.

However, in practice the overall transmit and receive chains, which can include the analog front ends and the digital sampling transmitters and receivers, as well as the physical cabling and antenna architecture, contribute to the over all channel response experienced by the receiver. In other words, the receiver will see an overall or equivalent channel between the input of the transmitter digital to analog converter (DAC) and the output of the receiver analog to digital converter (ADC), which can comprise the analog chain of the transmitter, the physical propagation channel, the physical antenna array structure (including cabling), and the analog receiver chain.

In view of at least the above, there exists a need in the art for a system and/or methodology of calibrating in antenna arrays employed in wireless communication devices.

SUMMARY

The following presents a simplified summary of one or more embodiments in order to provide a basic understanding of such embodiments. This summary is not an extensive overview of all contemplated embodiments, and is intended to neither identify key or critical elements of all embodiments nor delineate the scope of any or all embodiments. Its sole purpose is to present some concepts of one or more embodiments in a simplified form as a prelude to the more detailed description that is presented later.

The invention provides a solution according to the independent claims.

To the accomplishment of the foregoing and related ends, the one or more embodiments comprise the features hereinafter fully described and particularly pointed out in the claims. The following description and the annexed drawings set forth in detail certain illustrative aspects of the one or more embodiments. These aspects are indicative, however, of but a few of the various ways in which the principles of various embodiments may be employed and the described embodiments are intended to include all such aspects and their equivalents.

**BRIEF DESCRIPTION OF THE DRAWINGS**

FIG. 1 illustrates aspects of a multiple access wireless communication system

FIG. 2 illustrates an antenna arrangement comprising a receiver chain and a transmitter chain in accordance with various aspects described herein.

FIG. 3 illustrates aspects timing for calibration operations.

FIG. 4 illustrates aspects of logic that facilitates calibrating an antenna array to compensate for gain mismatch.

FIG. 5 illustrates aspects of a system that facilitates calibrating an antenna array to compensate for gain mismatch.

FIG. 6 illustrates aspects of a methodology for calibrating an array of antennas.

FIG. 7 illustrates aspects of a methodology for calibrating an array of antennas.

FIG. 8 illustrates aspects of a receiver and transmitter in a wireless communication system.

FIG. 9 illustrates aspects of an access point.

FIG. 10 illustrates aspects of a methodology for calibrating an array of antennas.

**DETAILED DESCRIPTION**

Various embodiments are now described with reference to the drawings, wherein like reference numerals are used to refer to like elements throughout. In the following description, for purposes of explanation, numerous specific details are set forth in order to provide a thorough understanding of one or more embodiments. It may be evident, however, that such embodiment(s) may be practiced without these specific details. In other instances, well-known structures and devices are shown in block diagram form in order to facilitate describing one or more embodiments.

As used in this application, the terms "component," "system," and the like are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. One or more components may reside within a process and/or thread of execution and a component may be localized on one computer and/or distributed between two or more computers. Also, these components can execute from various computer readable media having various data structures stored thereon. The components may communicate by way of local and/or remote processes such as in accordance with a signal having one or more data packets (*e.g.*, data from one component interacting with another component in a local system, distributed system, and/or across a network such as the Internet with other systems by way of the signal).

Furthermore, various embodiments are described herein in connection with a subscriber station. A subscriber station can also be called a system, a subscriber unit, mobile station, mobile, remote station, access point, base station, remote terminal, access terminal, user terminal, user agent, user equipment, *etc*. A subscriber station may be a cellular telephone, a cordless telephone, a Session Initiation Protocol (SIP) phone, a wireless local loop (WLL) station, a personal digital assistant (PDA), a handheld device having wireless connection capability, or other processing device connected to a wireless modem.

Moreover, various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include, but are not limited to, magnetic storage devices (*e.g.*, hard disk, floppy disk, magnetic strips...), optical disks (*e.g.*, compact disk (CD), digital versatile disk (DVD)...), smart cards, flash memory devices (*e.g.*, card, stick, key drive...), and integrated circuits such as read only memories, programmable read only memories, and electrically erasable programmable read only memories.

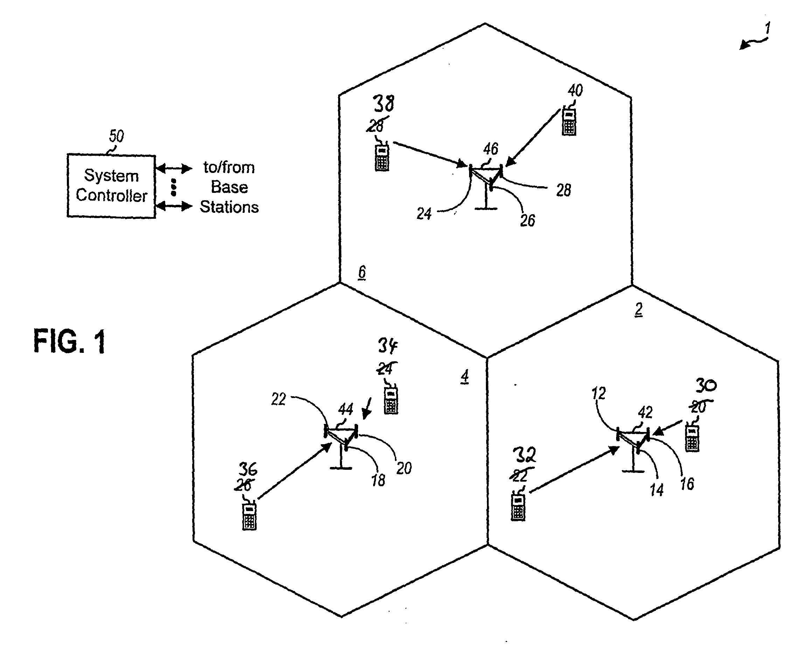

Referring to FIG. 1, a multiple access wireless communication system according to one embodiment is illustrated. A multiple access wireless communication system 1 includes multiple cells, e.g. cells 2, 104, and 106. In FIG. 1, each cell 2, 4, and 6 may include an access point that includes multiple sectors. The multiple sectors are formed by groups of antennas each responsible for communication with access terminals in a portion of the cell. In cell 2, antenna groups 12, 14, and 16 each correspond to a different sector. In cell 4, antenna groups 18, 20, and 22 each correspond to a different sector. In cell 6, antenna groups 24, 26, and 28 each correspond to a different sector.

Each cell includes several access terminals which are in communication with one or more sectors of each access point. For example, access terminals 30 and 32 are in communication with access point base 42, access terminals 34 and 36 are in communication with access point 44, and access terminals 38 and 40 are in communication with access point 46.

Controller 50 is coupled to each of the cells 2, 4, and 6. Controller 50 may contain one or more connections to multiple networks, e.g. the Internet, other packet based networks, or circuit switched voice networks that provide information to, and from, the access terminals in communication with the cells of the multiple access wireless communication system 1. The controller 50 includes, or is coupled with, a scheduler that schedules transmission from and to access terminals. In other embodiments, the scheduler may reside in each individual cell, each sector of a cell, or a combination thereof.

In order to facilitate calibration of transmissions to the access terminals, it is helpful to calibrate the access point gain calibration loop to deal with mismatches due to the transmit and receive chains of the access point. However, due to the noise in the channel, any calibration estimates based on the signals received at the access terminals, forward link, and transmitted from the access terminals, reverse link, may contain noise and other channel variations that may call into question the estimates provided used to provide the calibration. In order to overcome the channel noise effects, multiple calibrations on both the forward link and reverse link are utilized for multiple access terminals. In certain aspects, multiple transmissions to and from each access terminal are taken into account to perform calibration of a given sector.

In certain aspects, either the transmit chain of the access point or receive chain of the access point may be calibrated. This may be done, for example, by utilizing a calibration ratio to calibrate the receive chain of the access point to it's transmit chain or calibrate it's transmit chain to it's receive chain. The calibration ratio may then may be utilized to calibrate the transmit chain of the access point or receive chain of the access point.

As used herein, an access point may be a fixed station used for communicating with the terminals and may also be referred to as, and include some or all the functionality of, a base station, a Node B, or some other terminology. An access terminal may also be referred to as, and include some or all the functionality of, a user equipment (UE), a wireless communication device, terminal, a mobile station or some other terminology.

It should be noted that while FIG. 1, depicts physical sectors, i.e. having different antenna groups for different sectors, other approaches may be utilized. For example, utilizing multiple fixed "beams" that each cover different areas of the cell in frequency space may be utilized in lieu of, or in combination with physical sectors. Such an approach is depicted and disclosed in copending US Patent Application Serial No. 11/260,895, entitled "Adaptive Sectorization In Cellular System,".

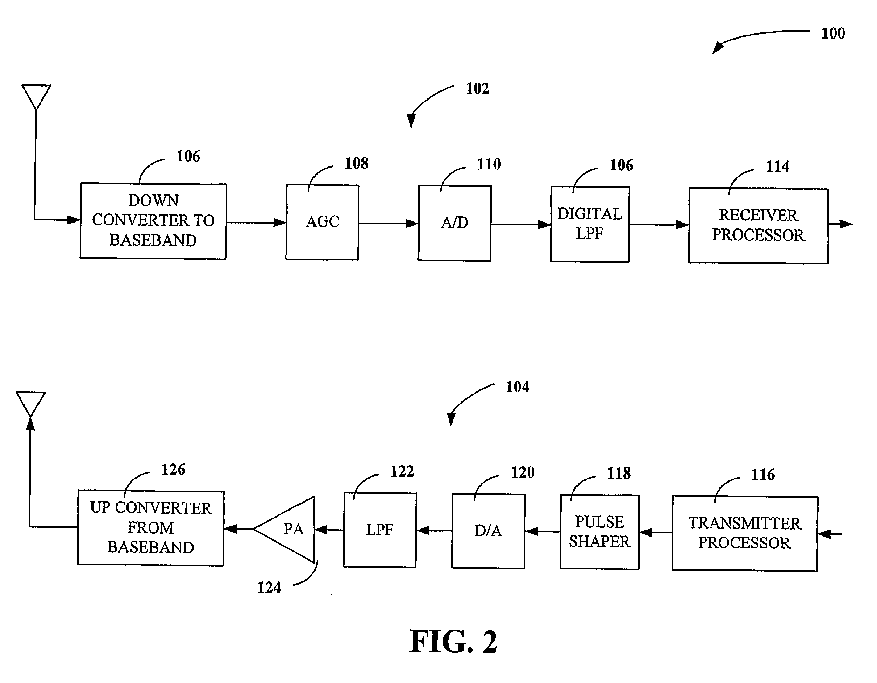

Referring to FIG. 2, an antenna arrangement 100 comprising a receiver chain 102 and a transmitter chain 104 in accordance with various aspects described herein is illustrated. Receiver chain 102 comprises a down converter component 106 that down converts a signal to a baseband upon receipt. Down converter component 106 is operatively connected to an automatic gain control (AGC) functionality 108 that assesses received signal strength and automatically adjusts a gain applied to the received signal to maintain receiver chain 102 within its associated linear operation range and to provide a constant signal strength for outputting through transmitter chain 104. It will be appreciated that AGC 108 can be optional to some embodiments described herein (e.g., automatic gain control need not be performed in conjunction with every embodiment). AGC 108 is operatively coupled to an analog-to-digital (A/D) converter 110 that converts the received signal to digital format before the signal is smoothed by a digital low-pass-filter (LPF) 112 that can mitigate short-term oscillations in the received signal. Finally, receiver chain 102 can comprise a receiver processor 114 that processes the received signal and can communicate the signal to one or more components of transmitter chain 104.

Transmitter chain 104 can comprise a transmitter processor 116 that receives a signal from receiver chain 102 (*e.g.*, transmitter receives a signal that was originally received by receiver chain 102 and subjected to various processes associated with the components thereof, ...). Transmitter processor 116 is operatively coupled to a pulse shaper 118 that can facilitate manipulating a signal to be transmitted such that the signal can be shaped to be within bandwidth constraints while mitigating and/or eliminating inter-symbol interference. Once shaped, the signal can undergo digital-to-analog (D/A) conversion by a D/A converter 120 before being subjected to an operatively associated low-pass filter (LPF) 122 in transmitter chain 104 for smoothing. A pulse amplifier (PA) component 124 can amplify the pulse/signal before up-conversion to the baseband by an up-converter 126.

Antenna array 100 may exist for each antenna of both an access point and access terminal. As such, there may be a noticeable difference observed between transfer characteristics of transmitter chain 104 and receiver chain 102 and/or samples thereof, reciprocity of the equivalent channel and/or transmitter/receiver variations may not be assumed. When calibrating an array of antennas 100, an understanding of the magnitude of variations, in terms of the effects on the phase and/or amplitude, of signals propagated along the transmitter and receiver chains and their influence on the accuracy of a reciprocity assumption may be utilized in order to facilitate the calibration process. Furthermore, in the case of an antenna array, generally each antenna 100 has a different transmitter chain 104 and a receiver chain 102 than each other antenna. Therefore, each different transmitter chain 104 may have different effects, in terms of phase and/or amplitude, as any other transmitter chain 104, respectively. The same can be true for receiver chains 102 of each antenna 100.

The mismatches in the effects can be due to the physical structure of the antenna 100, component differences, or a number of other factors. Such mismatches can include, for example, mutual coupling effects, tower effects, imperfect knowledge of element locations, amplitude and/or phase mismatches due to antenna cabling, and the like. Additionally, examples include, mismatches can be due to hardware elements in transmitter chain 104 and/or receiver chain 102 of each antenna 100. For example, such mismatches can be associated with analog filters, I and Q imbalance, phase and/or gain mismatch of a low-noise amplifier or an amplifier in the chains, various nonlinearity effects, *etc.*

For an access point, to calibrate each transmit chain to its corresponding receive chain (i.e. the receive chain corresponding to the same antenna) independently would require a complex and potentially unwieldy process. Further, any specific feedback, for forward link transmission, or pilots, used for reverse link transmission, for any given access terminal is subject to the noise for that user. Therefore, for any given calibration ratio estimated based on both the forward and reverse links, there is some error introduced by the channel variation and noise. Therefore, in several aspects, one or more calibration ratios estimated for a number of different access terminals are combined in order to obtain a single calibration ratio to be used by the access point for transmission to one or all of the access terminals. In certain aspects, the combination may constitute an average of all, or some predetermined subset, of the calibration ratios for each access terminal communicating with the access point. In another aspect, the combination may be done in a joint optimization fashion where the channel measurements from and for each access terminal are combined to estimate a single calibration ratio that is a combination of the gain mismatches for each access terminal, without calculating an individual calibration ratio for each access terminal.

For any given access terminal, the access point uses the related reverse link channel estimates and forward link channel estimates, which are performed at the access terminal and fed back to the access point, in order to estimate or calculate the calibration ratio, based on that access terminal.

A forward link channel estimate, $\hat{h}_{\text{AT}}^{(i)}$, may be estimated at the access terminal for transmissions from the access point's *i*-th transmit antenna. However, any channel estimate will have components related to the noise of the channel, along with any gain or distortion caused by the access points transmit chain and the access terminals receive chain. The forward link channel estimate may then be written as:

$$\hat{h}_{AT}^{(i)} = \beta_{AT} \cdot \alpha_{AP}^{(i)} \cdot h_i + n_i$$

| AT receive chain | AP transmit chain | Physical | Measurement |
| gain mismatch | gain mismatch | channel | noise |

(Equation 1)

In Equation 1, channel estimate is a function of the gain mismatch $\beta_{AT}$ of the access terminal receiver chain, the gain mismatch $\alpha_{AP}^{(i)}$ of the transmitter chain of the access point, $h_i$ which is the physical channel between the two antennas being measured, and the noise $n_i$ of the channel that is part of the channel estimate.

In the case of reverse link transmissions the channel estimate at the access point's *i*-th receive antenna due to transmission from the AT $\hat{h}_{AP}^{(i)}$ is essentially an inverse of Equation 1. This can be seen in Equation 2 below:

$$\hat{h}_{AP}^{(i)} = \alpha_{AT} \cdot \beta_{AP}^{(i)} \cdot h_i + \upsilon_i$$

| AT transmit chain | AP receive chain gain mismatch | Physical channel | Measurement noise |

(Equation 2)

In Equation 2, this channel estimate is a function of the gain mismatch $\alpha_{AT}$ of the access terminal transmit chain, the gain mismatch $\beta_{AP}^{(i)}$ of the access point receiver chain, $h_i$ which is the physical channel between the two antennas being measured, and the noise $\upsilon_i$ of the channel that is part of the channel estimate.

In order to calibrate the antenna array the mismatch errors between receiver chains 102 and transmitter chains 104 of antennas 100 therein is shown below in equation 3. It should be noted that other methodologies and mathematical relationships may be employed to achieve array calibration in conjunction with, in lieu of, the methodologies and mathematical relationships described herein.

(Equation 3)

$$c_i = \frac{\hat{h}_{AP}^{(i)}}{\hat{h}_{AT}^{(i)}} = \frac{\alpha_{AT}}{\beta_{AT}} \cdot \frac{\beta_{AP}^{(i)}}{\alpha_{AP}^{(i)}} = \gamma \cdot \frac{\beta_{AP}^{(i)}}{\alpha_{AP}^{(i)}} = \gamma \cdot \eta_i$$

In Equation 3, $c_i$ is the overall mismatch ratio between reverse link transmissions and forward link transmission, $\gamma$ is the mismatch ratio of the gains between transmit and receive chains of the access terminal, and $\eta_i$ is the mismatch ratio of the receive and transmit chains for the *i*th antenna at the access point. It should be noted that $\gamma$ is substantially constant for each antenna pair at the access point. Also, in some regards Equation 3 is idealized, as the noise estimate is not included therein.

The calibration ratios $c_i, i = 1, ..., M,$ where *M* is the number of antennas in the access point antenna array can be grouped into one vector $\tilde{\mathbf{c}}$, for each access terminal, which may be termed a "calibration vector."

$$\tilde{\mathbf{c}} = \begin{bmatrix} \tilde{c}_1 \\ \tilde{c}_2 \\ \vdots \\ \tilde{c}_M \end{bmatrix} = \gamma \cdot \begin{bmatrix} \eta_1 \\ \eta_2 \\ \vdots \\ \eta_M \end{bmatrix} + \begin{bmatrix} z_1 \\ z_2 \\ \vdots \\ z_M \end{bmatrix} = \gamma \cdot \boldsymbol{\eta} + \mathbf{n} \qquad \text{(Equation 4)}$$

In Equation 4, the entries of vector $\tilde{\mathbf{c}}$ correspond to the estimates for each antenna of the access point with respect to a single access terminal. It should be noted that the elements of vector $\hat{\mathbf{c}}$ may be complex numbers including both the amplitude and phase mismatch for each transmit and receive chains of the access point antenna array as well as common mismatch corresponding to the transmit and receive mismatch of the access terminal transmit and receive chains.

The noise vector **n** includes effects of channel measurement errors (MSE) and also the effects of channel measurement de-correlation, since the measurements of the gains are performed at different times thus allowing channel variation over time as well as temperature and other variations, to effect the measurement.

An estimated calibration vector $\tilde{c}_u$, corresponding to access terminal $u$, may be determined as shown below in Equation 5.

$$\tilde{\mathbf{c}}_u = \gamma_u \cdot \mathbf{\eta} \qquad \text{(Equation 5)}$$

where $\gamma_u$ is the gain mismatch corresponding to the access terminal transmit and receive chains and $\eta$ is the mismatch vector corresponding to the access point antenna array transmit and receive chains. The vector $\tilde{c}_u$ is determine for all of the antennas of the access point antenna array.

In the above it should be noted that there are several methods to combine different calibration estimates (corresponding to measurements from different access terminals) to generate an overall or combined calibration estimates. One way to do this combination is to average all the calibration estimates to obtain a single estimate.

In this approach, each calibration vector estimate includes a multiplicative factor, $\gamma_u$, which is different for different access terminals. In a case where one or more access terminals have a very large gain mismatch $\gamma_u$, simple averaging may lead to results that bias the average toward the access terminals having the largest gain mismatch $\gamma_u$.

In another aspect, each calibration vector estimate, corresponding to a specific access terminal, is normalized according to an element of the vector. This may provide minimization in those cases where one or more access terminals have high gain mismatch $\gamma_u$. This process is depicted below in Equation 6.

$$\overline{\mathbf{c}}_u = \frac{\overline{\mathbf{c}}_u}{\overline{\mathbf{c}}_{u,1}} \quad , \quad \tilde{\mathbf{c}} = \frac{1}{U}\sum_{u=1}^{U}\overline{\mathbf{c}}_u \qquad \text{(Equation 6)}$$

It should be noted that, in certain aspects, the normalizing element may be any element of the calibration vector, as long as it is the same element for each calibration vector estimate, e.g. the first element or another element. The sum of the normalized elements is then divided by the total number of elements $U$ of the vector $\tilde{c}$.

Another approach that may be utilized to combine different calibration vector estimates may be based upon combining the estimated vectors in a matrix. For instance, in certain aspects, it may be that that each calibration vector estimate is a rotated and scaled version of the same vector $\eta$ and the rotation and scaling are due to the different access terminal mismatches $\gamma_u$. One way to get rid of this scaling and rotation is to first normalize each calibration vector to have a unit norm. Then, a matrix **Q** whose columns are the normalized calibration vector estimates may be formed from the calibration vectors. A single estimate for the calibration vector is obtained by performing a decomposition of the matrix, e.g. a singular value decomposition on the matrix **Q**. The eigenvector corresponding to the maximum singular value may be used as the overall calibration vector estimate, e.g. as shown in Equation (7) below.

$$\mathbf{Q} = \begin{bmatrix} \hat{\mathbf{c}}_1 & \hat{\mathbf{c}}_2 & \cdots & \hat{\mathbf{c}}_U \end{bmatrix} \quad , \quad \hat{\mathbf{c}}_j = \frac{\tilde{\mathbf{c}}_j}{\left\| \tilde{\mathbf{c}}_j \right\|} \quad j = 1,...,U$$
$$\mathrm{SVD}(\mathbf{Q}) = \mathbf{U} \cdot \mathbf{S} \cdot \mathbf{V} \qquad \text{(Equation 7)}$$

As exemplified in the three approaches above, a calibration ratio is generally estimated in two steps. First, values corresponding to the elements of calibration vectors are calculated for the antenna array, or those antennas of interest, with respect to the individual access terminals. The calibration vectors are then combined according to one or more different mathematical processes.

An alternative to calculating multiple calibration vectors is to utilize a joint optimization procedure using multiple access point and access terminal measurement as follows. In some cases, the access terminal and access point may generate their channel estimates for different frequency tones and at different time instants. Further, there may be a timing error of $\tau_{k,u}$ between the access point and the $u$-th access terminal at time $k$. In such a case, the forward link channel vector estimate $\mathbf{g}_{i,k,u}$ measured at the access terminal may be related to the reverse link channel vector estimate $\mathbf{h}_{i,k,u}$ measured at the access point. One approach, utilizing the calibration vector $\eta$, and the access terminal mismatch $\gamma_u$ is depicted in Equation 8 below.

$$\mathbf{g}_{i,k,u} = \gamma_u \cdot e^{-j\omega_i \tau_u} \cdot \mathrm{diag}\!\left(\mathbf{h}_{i,k,u}\right) \cdot \boldsymbol{\eta} + \mathbf{n}_{i,k,u}$$
$$= \gamma_{i,k,u} \cdot \mathbf{Z}_{i,k,u} \cdot \boldsymbol{\eta} + \mathbf{n}_{i,k,u}$$

(Equation 8)

In Equation 8, $\mathbf{Z}_{i,k,u}$ is a diagonal matrix whose diagonal elements are the elements of the reverse link channel vector estimate $\mathbf{h}_{i,k,u}$ and $\gamma_{i,u} = \gamma_u \cdot e^{-j\omega_i \tau_u}$. The subscripts $i,k,u,$ are the tone, time, and user indexes, respectively. In the above equation, the unknowns are the calibration vector $\eta$ and the access terminal specific mismatch $\gamma_{i,k,u}$. A feature of Equation 8 is that access terminal mismatch includes the effect of the timing mismatch between the access point and the access terminal in addition to the gain mismatch due to the access terminal transmit and receive chains. One way to obtain a solution for $\eta$ and $\gamma_{i,k,u}$ is to utilize a minimum mean squared error (MMSE) approach as shown in Equation 9.

$$\rho \,\square\, \sum_{i,k,u} \left\| \bar{\gamma}_{i,k,u} \cdot \mathbf{g}_{i,k,u} - \mathbf{Z}_{i,k,u} \cdot \boldsymbol{\eta} \right\|^2$$
$$\left\{ \boldsymbol{\eta}, \bar{\gamma}_{i,k,u} \right\} = \underbrace{\arg\min}_{\boldsymbol{\eta}, \bar{\gamma}_{i,k,u}} \rho_u\!\left(\boldsymbol{\eta}, \bar{\gamma}_{i,k,u}\right) \quad \text{s.t.} \quad \left\| \boldsymbol{\eta} \right\| = 1$$

(Equation 9)

Solutions for $\eta$ and $\gamma_{i,k,u}$ may be given by Equation 10 below.

$$\boldsymbol{\eta} \,\square\, \text{minimal eigenvector of} \ \ \mathbf{F} = \sum_u \mathbf{F}_u = \sum_{i,k,u} \mathbf{Z}^{*}_{i,k,u} \cdot \prod\nolimits^{\perp}_{g_{i,k,u}} \cdot \mathbf{Z}_{i,k,u}$$
$$\gamma_{i,k,u} = \frac{\mathbf{g}^{*}_{i,k,u} \cdot \mathbf{Z}_{i,k,u} \cdot \boldsymbol{\eta}}{\mathbf{g}^{*}_{i,k,u} \mathbf{g}_{i,k,u}}$$

(Equation 10)

where, for a vector x, the orthogonal projection operator $\prod\nolimits^{\perp}_{\mathbf{x}}$ may be defined as

$$\prod\nolimits^{\perp}_{\mathbf{x}} = \mathbf{I} - \frac{\mathbf{x}\mathbf{x}^{*}}{\mathbf{x}^{*}\mathbf{x}}$$

(Equation 11)

To compensate for the mismatches, the calibration ratios may be used to alter the gain, in terms of both, or either, the phase and amplitude of the transmitter chain of the access point to match it to its receiver chain or equivalently to alter the gain of the receive chain of the access point to match it to its transmit chain.

In certain aspects, the access point may use maximal ratio combining (MRC) beamforming, equal gain combining (EGC) beamforming, or any other spatial pre-processing techniques for transmission to any access terminal. That is, if the reverse link channel vector is $\mathbf{h}$, the access point uses the following pre-processing weights for transmission:

$$\mathbf{w}_{\text{MRC}}(\mathbf{h}) = \mathbf{h}^{*} / \left| \mathbf{h} \right| \quad , \quad \left| \mathbf{h} \right| = \sqrt{\mathbf{h}^{*} \cdot \mathbf{h}} \qquad \text{for MRC}$$
$$\mathbf{w}_{\text{EGC}}(\mathbf{h}) = \frac{1}{\sqrt{M}} \exp(-j\varphi_{\mathbf{h}}) \quad , \quad \varphi_{\mathbf{h}} = \square\, \mathbf{h} \qquad \text{for EGC}$$

(Equation 12)

With a calibration vector estimate η, the access point may uses the following pre-processing weights to compensate for its transmit and receive chain mismatches:

$$\mathbf{w}_{MRC} = \mathrm{diag}(\boldsymbol{\eta}) \cdot \mathbf{h}^* / |\mathbf{h}| \quad , \quad |\mathbf{h}| = \sqrt{\mathbf{h}^* \cdot \mathbf{h}} \qquad \text{for MRC}$$

$$\mathbf{w}_{EGC} = \mathrm{diag}(\boldsymbol{\eta}_\phi) \cdot \frac{1}{\sqrt{M}} \exp(-j\boldsymbol{\varphi}_{\mathbf{h}}) \quad , \quad \boldsymbol{\varphi}_{\mathbf{h}} = \square\, \mathbf{h} \qquad \text{for EGC} \qquad \text{(Equation 13)}$$

where $\mathrm{diag}(\eta_\phi) = \mathrm{diag}(\square \eta)$.

While FIG. 2, depicts and describes one embodiment of receiver chain 102 and transmitter chain 104 other layouts and structures may be utilized. For example, a different number of components may be used in both receiver chain 102 and transmitter chain 104. Additionally, different devices and structures may also be substituted.

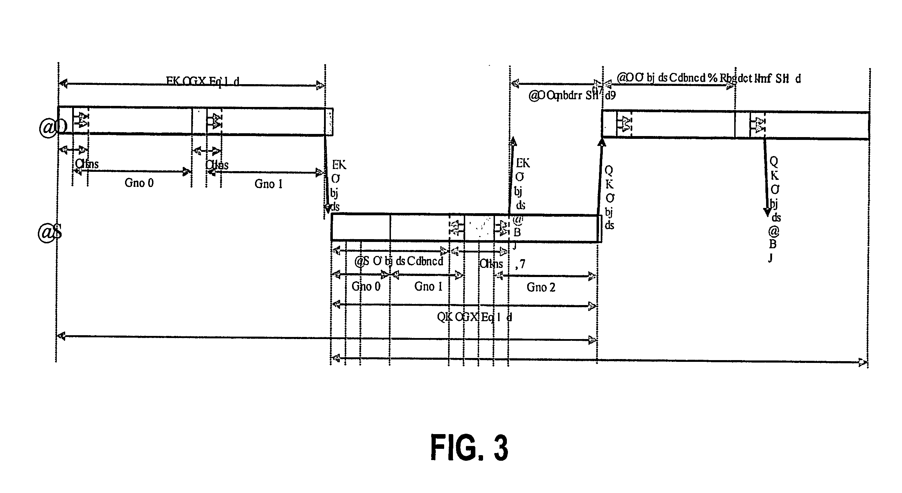

**FIG. 3** illustrates a timing cycle for a calibration from a single access terminal, where a TDD system having a single forward link frame or burst adjacent to a single reverse link frame or burst is utilized. As can be seen, one or more pilots transmitted on the reverse link is(are) measured at the access point. The time period of the measurement is a function of the decoding time of the access point. During this decoding period one or more pilots are transmitted on the forward link to the access terminal. The access terminal then measures the pilots to estimate the forward link channel. As with the reverse link estimates, some decoding lag exists. The decoded forward link estimates need to be transmitted back to the access point in order to generate the calibration ratio. Therefore, it can be seen that there is some minimum amount of time, and therefore maximum access terminal velocity, for which calibration can be maintained without drift being a strong or substantially interfering factor.

As can be seen from FIG. 3, if multiple channel estimates from multiple access terminals are utilized the noise and drift associated may be reduced or at least sampled over a range of times and receive chains thus receiving the overall calibration gain.

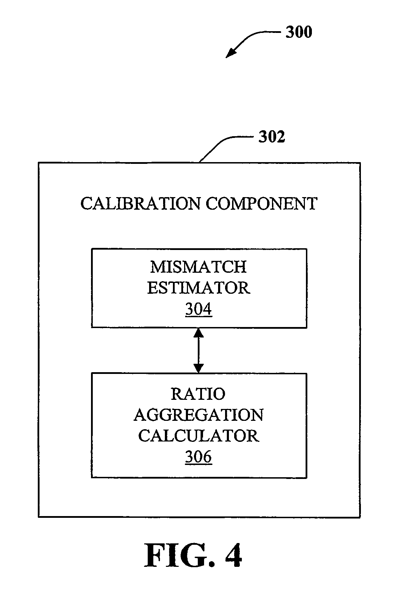

**FIG. 4** illustrates aspects of logic that facilitates calibrating an antenna array to compensate for gain mismatch. The system 300 comprises a calibration component 302 that includes a mismatch estimation component 304 that analyzes models receiver chain output signals and/or comparisons between receiver chain output signals and a ratio aggregation calculator 306 that calculates ratios that are used to generate vector $\widetilde{\boldsymbol{c}}_u$ and aggregates them for use using one of the methods described above to combine different measurements from different access terminals.

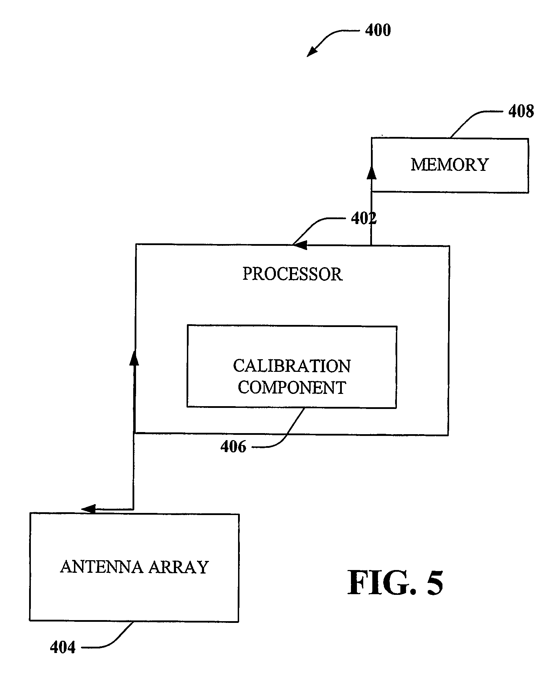

**FIG. 5** illustrates aspects of a system that facilitates calibrating an antenna array to compensate for gain mismatch. The system 400 comprises a processor 402 that is operatively coupled to an antenna array 404. Processor 402 can determine gain mismatches for individual antenna combinations at the access terminal and access point utilizing calibration component 406. Processor 402 further comprises a calibration component 406 that determines the calibration ratios and then generates and utilizes the vector $\widetilde{\boldsymbol{c}}_u$.

System 400 can additionally comprise memory 408 that is operatively coupled to processor 402 and that stores information related to array calibration, ratio generation and utilization, and generating calibration data, *etc.*, and any other suitable information related to calibrating antenna array 404. It is to be appreciated that processor 402 can be a processor dedicated to analyzing and/or generating information received by processor 402, a processor that controls one or more components of system 400, and/or a processor that both analyzes and generates information received by processor 402 and controls one or more components of system 400.

Memory 408 can additionally store protocols associated with generating signal copies and models/representations, mismatch estimations, *etc.*, such that system 400 can employ stored protocols and/or algorithms to achieve antenna calibration and/or mismatch compensation as described herein. It will be appreciated that the data store (*e.g.*, memories) components described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). The memory 408 of the subject systems and methods is intended to comprise, without being limited to, these and any other suitable types of memory.

In certain aspects, memory 408 can store the calibration vectors $\widetilde{\boldsymbol{c}}_u$ for each state, i.e. level of amplification, of the AGC. In such aspects, for each transmission, the processor 402 may access the calibration vector $\widetilde{\boldsymbol{c}}_u$ for the AGC state without performing a calibration. The decision as to whether to perform an additional calibration or access a prior calibration vector $\widetilde{\boldsymbol{c}}_u$ for a give transmission may be based upon a time period or number of transmissions since the calibration vector $\widetilde{\boldsymbol{c}}_u$ for the AGC state was obtained. This may be system parameter or may vary based upon channel conditions, e.g. loading of the channel.

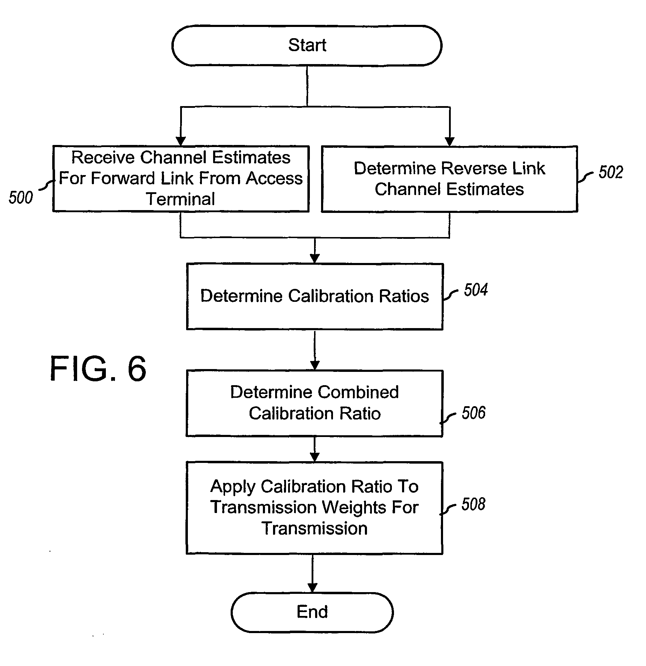

**FIG. 6** illustrates a methodology for calibrating an array of antennas for transmission. Channel estimates for the forward link are received from access terminals, block 500. As discussed above, these channel estimates may be generated from forward link pilots transmitted by the access point. Additionally, channel estimates for the reverse link information, e.g. reverse link channel pilots, are generated by the access point, block 502.

After both forward link and reverse link channel estimates are collected, calibration ratios for each access terminal and access point antenna may be determined, block 504. In certain aspects, the most recent forward link and reverse link channel estimate with respect to each other in time is utilized to form a calibration ratio. In such cases, multiple estimates for a given access terminal may be performed based upon consecutive channel estimate pairs of forward link and reverse link estimates.

As discussed with respect to FIG. 3, there may be some time lag between the different calculations and transmissions. Further, the functionality for blocks 500 and 502 may occur substantially simultaneously or at different times for the same or different access terminals. Therefore, a calibration ratio may be determined for a given access terminal based upon channel estimates of the forward link and reverse link transmissions that may or may not be consecutive in time.

The calibration ratios are then combined to form a calibration estimate over multiple access terminals, block 506. This combined calibration ratio may include calibration ratios to some or all of the access terminals in a given sector or cell, and have an unequal or equal number of calibration ratios for each access terminal for which one or more calibration ratios are being obtained.

The combined calibration ratio may be obtained by simply averaging the calibration ratios or utilizing the other approaches discussed with respect to FIG. 2, e.g. the approaches discussed with respect to Equations 5 or 7.

Each transmission from each transmission chain of the access point is then weighted with weights based upon the combined calibration ratio for that transmit chain, block 508. Also, a combined or joint set of calibrations weights may be utilized for one or more transmit chains of the access point. Alternatively, it is possible to transmit this combined calibration ratio or a calibration instruction based upon the combined calibration ratio to one or more access terminals. The access terminals would then apply the weights based upon the combined calibration ratio to decoding of the transmissions received at the access terminal.

Also, in some aspects, the calibration weights are utilized for a particular AGC state and not for other AGC states. As such, block 508, would then only apply to the AGC state during block 500.

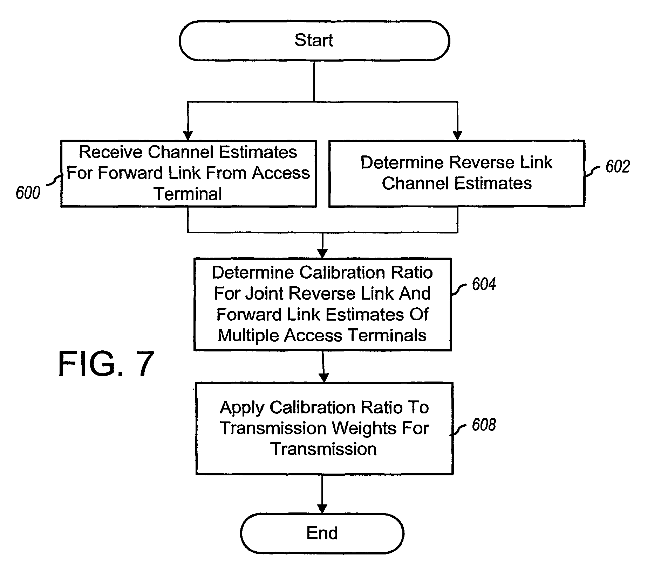

**FIG. 7** illustrates another methodology for calibrating an array of antennas for transmission. Channel estimates for the forward link are received from access terminals, block 600. As discussed above, these channel estimates may be generated from forward link pilots transmitted by the access point. Additionally, channel estimates for the reverse link information, e.g. reverse link channel pilots, are generated by the access point, block 602.

After both forward link and reverse link channel estimates are collected, a calibration ratio that utilizes multiple channel estimates for multiple access terminals block 604. In certain aspects, the most recent forward link and reverse link channel estimate with respect to each other in time is utilized. In such cases, multiple estimates for a given access terminal may be performed based upon consecutive channel estimate pairs of forward link and reverse link estimates.

As discussed with respect to FIG. 3, there may be some time lag between the different calculations and transmissions. Further, the functionality for blocks 600 and 602 may occur substantially simultaneously or at different times for the same or different access terminals. Therefore, the channel estimates may be determined for a given access terminal based upon channel estimates of the forward link and reverse link transmissions that may or may not be consecutive in time.

The joint calibration ratio may be obtained by utilizing a joint optimization process as discussed with respect to FIG. 2, e.g. to Equation 8.

Each transmission from each transmission chain of the access point is then weighted with weights based upon the joint calibration ratio for that transmit chain, 608. Also, a combined or joint set of calibrations weights may be utilized for one or more transmit chains of the access point. Alternatively, it is possible to transmit this joint calibration ratio or a calibration instruction based upon the joint calibration ratio to one or more access terminals. The access terminals would then apply the weights based upon the joint calibration ratio to decoding of the transmissions received at the access terminal.

Also, in some aspects, the calibration weights are utilized for a particular AGC state and not for other AGC states. As such, block 608, would then only apply to the AGC state during block 600.

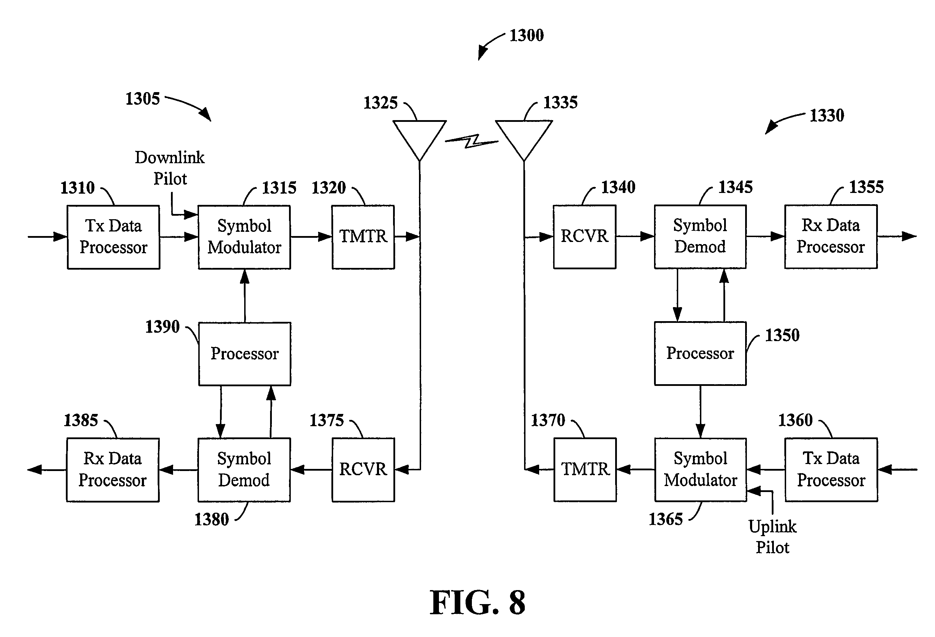

**Fig. 8** illustrates an exemplary wireless communication system 1300. The wireless communication system 1300 depicts one base station and one terminal for sake of brevity. However, it is to be appreciated that the system can include more than one base station and/or more than one terminal, wherein additional base stations and/or terminals can be substantially similar or different for the exemplary base station and terminal described below. In addition, it is to be appreciated that the base station and/or the terminal can employ the systems **(Figs. 1-5)** and/or methods **(Figs. 6-7, and 10)** described herein to facilitate wireless communication there between.

Referring now to **Fig. 8,** on a forward link transmission, at access point 1305, a transmit (TX) data processor 1310 receives, formats, codes, interleaves, and modulates (or symbol maps) traffic data and provides modulation symbols ("data symbols"). A symbol modulator 1315 receives and processes the data symbols and pilot symbols and provides a stream of symbols. A symbol modulator 1320 multiplexes data and pilot symbols on the proper subcarriers, provides a signal value of zero for each unused subcarrier, and obtains a set of N transmit symbols for the N subcarriers for each symbol period. Each transmit symbol may be a data symbol, a pilot symbol, or a signal value of zero. The pilot symbols may be sent continuously in each symbol period. It will be appreciated that the pilot symbols may be time division multiplexed (TDM), frequency division multiplexed (FDM), orthogonal frequency division multiplexed (OFDM), code division multiplexed (CDM), *etc.* Symbol modulator 1320 can transform each set of *N* transmit symbols to the time domain using an *N*-point IFFT to obtain a "transformed" symbol that contains *N* time-domain chips. Symbol modulator 1320 typically repeats a portion of each transformed symbol to obtain a corresponding symbol. The repeated portion is known as a cyclic prefix and is used to combat delay spread in the wireless channel.

A transmitter unit (TMTR) 1320 receives and converts the stream of symbols into one or more analog signals and further conditions (*e.g.*, amplifies, filters, and frequency upconverts) the analog signals to generate a forward link signal suitable for transmission over the wireless channel. The forward link signal is then transmitted through an antenna 1325 to the terminals. At terminal 1330, an antenna 1335 receives the forward link signal and provides a received signal to a receiver unit (RCVR) 1340. Receiver unit 1340 conditions (*e.g.*, filters, amplifies, and frequency downconverts) the received signal and digitizes the conditioned signal to obtain samples. A symbol demodulator 1345 removes the cyclic prefix appended to each symbol, transforms each received transformed symbol to the frequency domain using an N-point FFT, obtains N received symbols for the N subcarriers for each symbol period, and provides received pilot symbols to a processor 1350 for channel estimation. Symbol demodulator 1345 further receives a frequency response estimate for the forward link from processor 1350, performs data demodulation on the received data symbols to obtain data symbol estimates (which are estimates of the transmitted data symbols), and provides the data symbol estimates to an RX data processor 1355, which demodulates (*e.g.*, symbol demaps), deinterleaves, and decodes the data symbol estimates to recover the transmitted traffic data. The processing by symbol demodulator 1345 and RX data processor 1355 is complementary to the processing by symbol modulator 1315 and TX data processor 1310, respectively, at access point 1300.

On the reverse link, a TX data processor 1360 processes traffic data and provides data symbols. A symbol modulator 1365 receives and multiplexes the data symbols with pilot symbols, performs modulation, and provides a stream of symbols. The pilot symbols may be transmitted on subcarriers that have been assigned to terminal 1330 for pilot transmission, where the number of pilot subcarriers for the reverse link may be the same or different from the number of pilot subcarriers for the forward link. A transmitter unit 1370 then receives and processes the stream of symbols to generate a reverse link signal, which is transmitted by the antenna 1335 to the access point 1310.

At access point 1310, the reverse link signal from terminal 1330 is received by the antenna 1325 and processed by a receiver unit 1375 to obtain samples. A symbol demodulator 1380 then processes the samples and provides received pilot symbols and data symbol estimates for the reverse link. An RX data processor 1385 processes the data symbol estimates to recover the traffic data transmitted by terminal 1335. A processor 1390 performs channel estimation for each active terminal transmitting on the reverse link.

The processor 1390 may also be configured to perform generation of the calibration ratios and combined calibration ratio, or the joint calibration ratio as discussed with respect to FIGS. 2, 6 and 7 respectively.

Processors 1390 and 1350 direct (*e.g.*, control, coordinate, manage, *etc*.) operation at access point 1310 and terminal 1335, respectively. Respective processors 1390 and 1350 can be associated with memory units (not shown) that store program codes and data. Processors 1390 and 1350 can also perform computations to derive frequency and impulse response estimates for the reverse link and forward link, respectively.

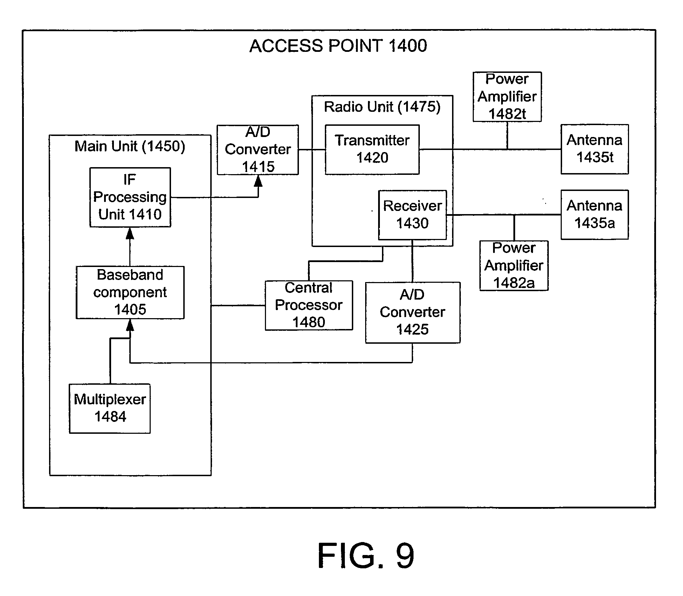

Referring to **FIG. 9**, an access point can comprise a main unit (MU) 1450 and a radio unit (RU) 1475. MU 1450 includes the digital baseband components of an access point. For example, MU 1450 can include a baseband component 1405 and a digital intermediate frequency (IF) processing unit 1410. Digital IF processing unit 1410 digitally processes radio channel data at an intermediate frequency by performing such functions as filtering, channelizing, modulation, and so forth. RU 1475 includes the analog radio parts of the access point. As used herein, a radio unit is the analog radio parts of an access point or other type of transceiver station with direct or indirect connection to a mobile switching center or corresponding device. A radio unit typically serves a particular sector in a communication system. For example, RU 1475 can include one or more receivers 1430 connected to one more antennas 1435a-t for receiving radio communications from mobile subscriber units. In an aspect, one or more power amplifiers 1482 a-t are coupled to one or more antennas 1435 a-t. Connected to receiver 1430 is an analog-to-digital (A/D) converter 1425. A/D converter 1425 converts the analog radio communications received by receiver 1430 into digital input for transmission to baseband component 1405 via digital IF processing unit 1410. RU 1475 can also include one or more transmitters 120 connected to either the same or different antenna 1435 for transmitting radio communications to access terminals. Connected to transmitter 1420 is a digital-to-analog (D/A) converter 1415. D/A converter 1415 converts the digital communications received from baseband component 1405 via digital IF processing unit 1410 into analog output for transmission to the mobile subscriber units. In some aspects, a multiplexer 1484 for multiplexing of multiple-channel signals and multiplexing of a variety of signals including a voice signal and a data signal. A central processor 1480 is coupled to main unit 1450 and Radio Unit for controlling various processing which includes the processing of voice or data signal.

For a multiple-access system (*e.g.*, a frequency division multiple-access (FDMA) system, an orthogonal frequency division multiple-access (OFDMA) system, a code division multiple-access (CDMA) system, a time division multiple-access (TDMA) system, *etc.*), multiple terminals may transmit concurrently on the reverse link. For such a system, the pilot subcarriers may be shared among different terminals. The channel estimation techniques may be used in cases where the pilot subcarriers for each terminal span the entire operating band (possibly except for the band edges). Such a pilot subcarrier structure would be desirable to obtain frequency diversity for each terminal. The techniques described herein may be implemented by various means. For example, these techniques may be implemented in hardware, software, or a combination thereof. For a hardware implementation, the processing units used for channel estimation may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. With software, implementation can be through modules (e.g., procedures, functions, and so on) that perform the functions described herein. The software codes may be stored in memory unit and executed by the processors 1390 and 1350.

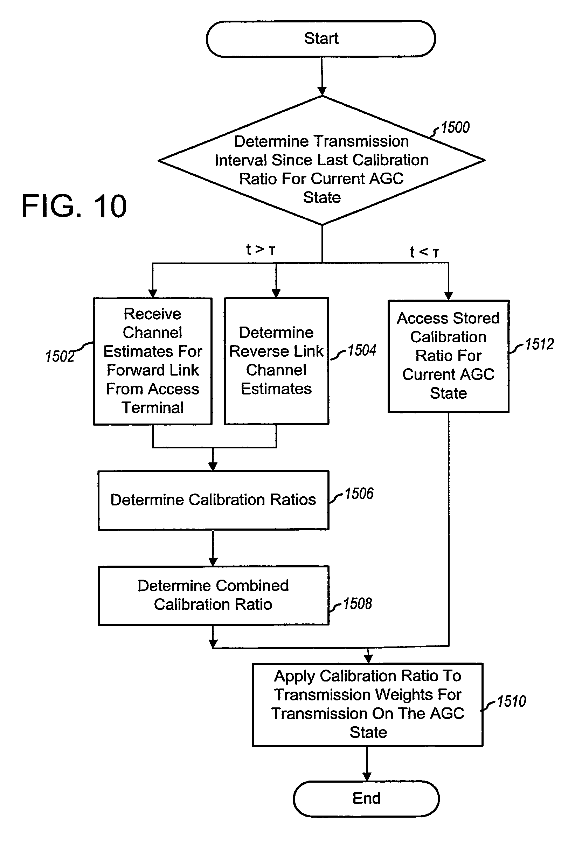

FIG. 10 illustrates an additional methodology for calibrating an array of antennas for transmission. A determination is made as to the transmission interval since the last calibration for the current AGC state that is to be utilized for transmission, block 1500. In certain cases this interval may be a function of time elapsed, in others it may be a function of the number of transmission, forward link, reverse link, or both, since the last calibration for the AGC state. This determination is based upon a threshold T that may be predetermined or vary based upon conditions, e.g. loading.

If the transmission interval is greater than T, then another calibration operation is performed, where channel estimates for the forward link are received from access terminals, block 1502 and channel estimates for the reverse link are generated by the access point, block 1504. After both forward link and reverse link channel estimates are collected, a calibration ratio that utilizes multiple channel estimates for multiple access terminals, block 1506.

After both forward link and reverse link channel estimates are collected, a calibration ratio that utilizes multiple channel estimates for multiple access terminals block, 1512. Each transmission, for the AGC state, from each transmission chain of the access point is then weighted with weights based upon the joint calibration ratio for that transmit chain are utilized for the AGC state, 1510.

If the transmission interval is greater than $\tau$, then a calibration vector, e.g. weights, for the particular AGC state are accessed from memory, block 1512. Each transmission, for the AGC state, from each transmission chain of the access point is then weighted with weights based upon memory accessed weights for the AGC state, 1510.

## Claims

1. A method of calibrating an antenna array (100, 404) in a wireless network (1) including multiple cells for time domain duplexed channel transmission technique, comprising:

   receiving first channel estimate information corresponding to transmissions to a first access terminal;
   determining second channel estimate information corresponding to transmissions from the first access terminal;
   receiving third channel estimate information corresponding to transmissions to a second access terminal;
   determining fourth channel estimate information corresponding to transmissions from the second access terminal; **characterized in** the method further comprising:

      determining a combined calibration ratio based upon the first, second, third, and fourth channel estimate information for at least the first and second access terminals (30, 32, 34, 36, 38, 40) by:

         determining a first calibration ratio based upon the first and second channel estimate information;
         determining second calibration ratio based upon the third and fourth channel estimate information;
         and determining the combined calibration ratio based upon combining the first and second calibration ratios.

2. The method of claim 1, wherein combining comprises averaging the first and second calibration ratios.

3. The method of claim 1, wherein the first and second calibration ratios comprise a plurality of elements each corresponding to at least one antenna (12, 14, 16, 18, 20, 24, 26, 28) of an access point in communication with the first and second access terminals (30, 32, 34, 36, 38, 40), and wherein combining comprises:

normalizing the first calibration ratio;
normalizing the second calibration ratio;
and determining the combined calibration ratio based upon a matrix including the first and second calibration ratio.

4. The method of claim 3, wherein determining the combined calibration ratio based upon the matrix comprises decomposing the matrix utilizing singular value decomposition.

5. The method of claim 1, wherein determining the combined calibration ratio comprises determining a joint calibration ratio based upon the first, second, third, and fourth channel estimate information.

6. The method of claim 1, wherein determining the combined calibration ratio comprises solving the equation:

$$\mathbf{g}_{i,k,u} = \gamma_u \cdot e^{-j\omega_i \tau_u} \cdot \mathrm{diag}\left(\mathbf{h}_{i,k,u}\right) \cdot \boldsymbol{\eta} + \mathbf{n}_{i,k,u}$$
$$= \gamma_{i,k,u} \cdot \mathbf{Z}_{i,k,u} \cdot \boldsymbol{\eta} + \mathbf{n}_{i,k,u}$$

where $\mathbf{Z}_{i,k,u}$ is a diagonal matrix whose diagonal elements are the elements of the reverse link channel vector estimate $\mathbf{h}_{i,k,u}$, $\gamma_{i,u} = \gamma_u \cdot e^{-j\omega_i \tau_u}$, and the subscripts $i,k,u$, are the tone, time, and user indexes, respectively, and wherein $\eta$ is the calibration vector corresponding to an access point antenna array transmit and receive chains, n is the noise vector, $g_{i,k,u}$ is the forward link channel vector estimate, $h_{i,k,u}$ is the reverse link channel vector estimate, $\gamma_{i,k,u}$ is the access terminal mismatch and $\tau_u$ is the timing error between the access point and the u-th access terminal.

7. The method of claim 6, wherein solving comprising using an MMSE technique to solve the equation.

8. The method of claim 1, wherein determining the combined calibration ratio comprises utilizing a joint optimization scheme with the first, second, third, and fourth channel estimate information.

9. The method of claim 1, further comprising
receiving fifth channel estimate information corresponding to transmissions to a third access terminal;
determining sixth channel estimate information corresponding to transmissions from the third access terminal;
and determining a combined calibration ratio based upon the first, second, third, fourth, fifth, and sixth channel estimate information for at least the first, second, and third access terminals (30, 32, 34, 36, 38, 40).

10. An apparatus adapted to perform all steps of claim 1, the apparatus comprising:

means for receiving first channel estimate information corresponding to transmissions to at least a first access terminal;
means for determining second channel estimate information corresponding to transmissions from the first access terminal;
means for receiving third channel estimate information corresponding to transmissions to a second access terminal;
means for determining fourth channel estimate information corresponding to transmissions from the second access terminal;
and means for determining a combined calibration ratio based upon the first, second, third and fourth channel estimate information for at the least first and second access terminals (30, 32, 34, 36, 38, 40) by:

means for determining a first calibration ratio based upon the first and second channel estimate information;
means for determining a second calibration ratio based upon the third and fourth channel estimate information; and
means for determining the combined calibration ratio based upon combining the first and second calibration ratios.

11. The apparatus of claim 10, wherein the means for combining comprises means for averaging the different calibration ratios.

12. The apparatus of claim 10, wherein the different calibration ratios comprise a plurality of elements, and wherein means for determining comprises:

> means for normalizing each of the different calibration ratios;
> and means for determining the calibration ratio based upon a matrix including the first and second calibration ratio.

13. The apparatus of claim 10, wherein the means for determining the calibration ratio comprises means for determining a joint calibration ratio based upon the first and second channel estimate information for at the least first and second access terminals (30, 32, 34, 36, 38, 40).

14. The apparatus of claim 10, wherein the means for determining the calibration ratio comprises means for utilizing a joint optimization scheme with the first and second channel estimate information for at the least first and second access terminals (30, 32, 34, 36, 38, 40).

15. The apparatus of claim 10, wherein the apparatus is a wireless communication apparatus comprising:

> at least two antennas (12, 14, 16, 18, 20, 24, 26, 28); and
> a processor (402) coupled with the at least two antennas (12, 14, 16, 18, 20, 24, 26, 28), the processor (402) configured to determine a calibration ratio, based upon a plurality of forward link channel estimates and reverse link channel estimates from a plurality of access terminals (30, 32, 34, 36, 38, 40), for communication with each of the plurality of access terminals (30, 32, 34, 36, 38, 40).

16. The wireless communication apparatus of claim 15, wherein the processor (402) is configured to determine a calibration ratio for each access terminal of the plurality and to determine the calibration ratio based upon combining each of the calibration ratios for each of the access terminals (30, 32, 34, 36, 38, 40).

17. The wireless communication apparatus of claim 16, wherein the processor (402) is configured to combine the ratios by averaging each of the calibration ratios.

18. The wireless communication apparatus of claim 16, wherein the processor (402) is configured to combine the ratios by normalizing each calibration ratio and to determine the calibration ratio based upon a matrix including each of the calibration ratios.

19. The wireless communication apparatus of claim 18, wherein the processor (402) is configured utilize singular value decomposition to decompose the matrix to obtain the calibration ratio.

20. The wireless communication apparatus of claim 15, wherein the processor (402) is configured to determine the calibration ratio utilizing a joint calibration ratio.

21. The wireless communication apparatus of claim 15, wherein the processor (402) is configured to determine the calibration ratio by solving the equation:

$$\mathbf{g}_{i,k,u} = \gamma_u \cdot e^{-j\omega_i \tau_u} \cdot \mathrm{diag}\left(\mathbf{h}_{i,k,u}\right) \cdot \mathbf{\eta} + \mathbf{n}_{i,k,u}$$
$$= \gamma_{i,k,u} \cdot \mathbf{Z}_{i,k,u} \cdot \mathbf{\eta} + \mathbf{n}_{i,k,u}$$

where $\mathbf{Z}_{i,k,u}$ is a diagonal matrix whose diagonal elements are the elements of the reverse link channel vector estimate $\mathbf{h}_{i,k,u}$, $\gamma_{l,u} = \gamma_u \cdot e^{-j\omega_i \tau_u}$, and the subscripts $i,k,u$, are the tone, time, and user indexes, respectively, and wherein $\eta$ is the calibration vector corresponding to an access point antenna array transmit and receive chains, n is the noise vector, $g_{i,k,u}$ is the forward link channel vector estimate, $h_{i,k,u}$ is the reverse link channel vector estimate, $\gamma_{i,k,u}$ is the access terminal mismatch and $\tau_u$ is the timing error between the access point and the u-th access terminal.

**22.** The wireless communication apparatus of claim 10, wherein the processor (402) is configured to solve the equation by using an MMSE technique.

**23.** The wireless communication apparatus of claim 10, wherein the processor (402) is configured to determine the calibration ratio comprises utilizing a joint optimization scheme with the plurality of forward link channel estimates and reverse link channel estimates from the plurality of access terminals (30, 32, 34, 36, 38, 40).

**Patentansprüche**

**1.** Verfahren zum Kalibrieren eines Antennen-Arrays (100, 404) in einem drahtlosen Netzwerk (1), welches mehrere Zellen für die Übertragungstechnik in Zeit-Domänen-Duplex umfasst, wobei das Verfahren umfasst:

Empfangen einer ersten Kanalschätzinformation, welche mit Übertragungen an ein erstes Zugangsendgerät korrespondiert;
Ermitteln zweiter Kanalschätzinformation, welche mit Übertragungen von dem ersten Zugangsendgerät korrespondiert;
Empfangen dritter Kanalschätzinformation, welche mit Übertragungen an ein zweites Zugangsendgerät korrespondiert;
Ermitteln vierter Kanalschätzinformation, welche mit Übertragungen von dem zweiten Zugangsendgerät korrespondiert; **dadurch gekennzeichnet, dass** das Verfahren weiter umfasst:

Ermitteln eines kombinierten Kalibrierungsverhältnisses basierend auf der ersten, zweiten, dritten und vierten Kanalschätzinformation für wenigstens das erste und zweite Zugangsendgerät (30, 32, 34, 38, 40) durch:

Ermitteln eines ersten Kalibrierungsverhältnisses basierend auf der ersten und zweiten Kanalschätzinformation;
Ermitteln eines zweiten Kalibrierungsverhältnisses basierend auf der dritten und vierten Kanalschätzinformation;
und Ermitteln des kombinierten Kalibrierungsverhältnisses basierend auf der Kombination der ersten und zweiten Kalibrierungsverhältnisse.

**2.** Verfahren nach Anspruch 1, wobei das Kombinieren das Mitteln der ersten und zweiten Kalibrierungsverhältnisse umfasst.

**3.** Verfahren nach Anspruch 1, wobei das erste und das zweite Kalibrierungsverhältnis eine Mehrzahl von Elementen umfasst, welche jeweils mit wenigstens einer Antenne (12, 14, 16, 18, 20, 24, 26, 28) eines Zugangspunktes in Kommunikation mit dem ersten und dem zweiten Zugangsendgerät (30, 32, 34, 36, 38, 40) korrespondiert, und wobei das Kombinieren umfasst:

Normieren des ersten Kalibrierungsverhältnisses;
Normieren des zweiten Kalibrierungsverhältnisses; und Ermitteln des kombinierten Kalibrierungsverhältnisses basierend auf einer Matrix, welche das erste und das zweite Kalibrierungsverhältnis umfasst.

**4.** Verfahren nach Anspruch 3, wobei das Ermitteln des kombinierten Kalibrierungsverhältnisses basierend auf der Matrix die Dekomposition der Matrix unter Verwendung von Singulärwert-Dekomposition umfasst.

**5.** Verfahren nach Anspruch 1, wobei das Ermitteln des kombinierten Kalibrierungsverhältnisses das Ermitteln eines gemeinsamen Kalibrierungsverhältnisses basierend auf der ersten, zweiten, dritten und vierten Kanalschätzinformation umfasst.

**6.** Verfahren nach Anspruch 1, wobei das Ermitteln des kombinierten Kalibrierungsverhältnisses das Lösen der Gleichung umfasst:

$$\mathbf{g}_{i,k,u} = \gamma_u \cdot e^{-j\omega_i \tau_u} \cdot \mathrm{diag}\left(\mathbf{h}_{i,k,u}\right) \cdot \mathbf{\eta} + \mathbf{n}_{i,k,u}$$

$$= \gamma_{i,k,u} \cdot \mathbf{Z}_{i,k,u} \cdot \mathbf{\eta} + \mathbf{n}_{i,k,u}$$

wobei $Z_{i,k,u}$ eine diagonale Matrix ist, deren diagonale Elemente die Elemente der Rückwärtsverbindungskanalvektorschätzung $h_{i,k,u}$ sind, $\gamma_{i,u} = \gamma_u e^{-j\omega_i \tau_u}$ und die Subskripte i, k, u, der Ton, die Zeit und die Nutzerindices sind, und wobei η der Kalibrierungsvektor ist, der mit einer Sende- und Empfangskette eines Zugangspunkt Antennen-Arrays korrespondiert, n der Rauschvektor ist, $g_{i,k,u}$ die Vorwärtsverbindungskanalvektorschätzung ist, $h_{i,k,u}$ die Rückwärtsverbindungskanalvektorschätzung ist, $\gamma_{i,k,u}$ der Versatz des Zugangsendgeräts ist und $\tau_u$ der Taktfehler zwischen dem Zugangspunkt und dem u-ten Zugangsendgerät ist.

**7.** Verfahren nach Anspruch 6, wobei das Lösen das Verwenden einer MMSE Technik zum Lösen der Gleichung umfasst.

**8.** Verfahren nach Anspruch 1, wobei das Ermitteln des kombinierten Kalibrierungsverhältnisses das Verwenden eines gemeinsamen Optimierungsschemas mit der ersten, zweiten, dritten und vierten Kanalschätzinformation umfasst.

**9.** Verfahren nach Anspruch 1, weiter umfassend
Empfangen fünfter Kanalschätzinformation, welche mit Übertragungen an ein drittes Zugangsendgerät korrespondiert;
Ermitteln sechster Kanalschätzinformation, welche mit Übertragungen von dem dritten Zugangsendgerät korrespondiert;
und Ermitteln eines kombinierten Kalibrierungsverhältnisses basierend auf der ersten, zweiten, dritten, vierten, fünften und sechsten Kanalschätzinformation für wenigstens das erste, zweite und dritte Zugangsendgerät (30, 32, 34, 36, 38, 40).

**10.** Vorrichtung eingerichtet zum Durchführen aller Schritte nach Anspruch 1, wobei die Vorrichtung umfasst:

Mittel zum Empfangen erster Kanalschätzinformation, welche mit Übertragungen an wenigstens ein erstes Zugangsendgerät korrespondiert;
Mittel zum Ermitteln zweiter Kanalschätzinformation, welche mit Übertragungen von dem ersten Zugangsendgerät korrespondiert;
Mittel zum Empfangen dritter Kanalschätzinformation, welche mit Übertragungen an ein zweites Zugangsendgerät korrespondiert;
Mittel zum Ermitteln vierter Kanalschätzinformation, welche mit Übertragungen von dem zweiten Zugangsendgerät korrespondiert;
und Mittel zum Ermitteln eines kombinierten Kalibrierungsverhältnisses basierend auf der ersten, zweiten, dritten und vierten Kanalschätzinformation für wenigstens das erste und zweite Zugangsendgerät (30, 32, 34, 36, 38, 40) durch:

Mittel zum Ermitteln eines erstens Kalibrierungsverhältnisses basierend auf der ersten und zweiten Kanalschätzinformation;
Mittel zum Ermitteln eines zweiten Kalibrierungsverhältnisses basierend auf der dritten und vierten Kanalschätzinformation; und
Mittel zum Ermitteln des kombinierten Kalibrierungsverhältnisses basierend auf der Kombination des ersten und zweiten Kalibrierungsverhältnisses.

**11.** Vorrichtung nach Anspruch 10, wobei die Mittel zum Kombinieren Mittel zum Mitteln der verschiedenen Kalibrierungsverhältnisse umfassen.

**12.** Vorrichtung nach Anspruch 10, wobei die verschiedenen Kalibrierungsverhältnisse eine Mehrzahl von Elementen umfassen, und wobei die Mittel zum Ermitteln umfassen:

Mittel zum Normieren jedes der verschiedenen Kalibrierungsverhältnisse;
und Mittel zum Ermitteln des Kalibrierungsverhältnisses basierend auf einer Matrix, welche das erste und das zweite Kalibrierungsverhältnis umfasst.

13. Vorrichtung nach Anspruch 10, wobei die Mittel zum Ermitteln des Kalibrierungsverhältnisses Mittel zum Ermitteln eines gemeinsamen Kalibrierungsverhältnisses basierend auf der ersten und zweiten Kanalschätzinformation für wenigstens das erste und zweite Zugangsendgerät (30, 32, 34, 36, 38, 40) umfasst.

14. Vorrichtung nach Anspruch 10, wobei die Mittel zum Ermitteln des Kalibrierungsverhältnisses Mittel zum Verwenden eines gemeinsamen Optimierungsschemas mit der ersten und zweiten Kanalschätzinformation für wenigstens das erste und zweite Zugangsendgerät (30, 32, 34, 36, 38, 40) umfassen.

15. Vorrichtung nach Anspruch 10, wobei die Vorrichtung eine drahtlose Kommunikationsvorrichtung ist, umfassend:

wenigstens zwei Antennen (12, 14, 16, 18, 20, 24, 26, 28); und
einen Prozessor (402), welcher mit den wenigstens zwei Antennen (12, 14, 16, 18, 20, 24, 26, 28) gekoppelt ist, wobei der Prozessor (402) dazu eingerichtet ist, ein Kalibrierungsverhältnis basierend auf einer Mehrzahl von Vorwärtsverbindungskanalschätzungen und Rückwärtsverbindungskanalschätzungen von einer Mehrzahl von Zugangsendgeräten (30, 32, 34, 36, 38, 40) zu bestimmen für die Kommunikation mit jedem der Mehrzahl der Zugangsendgeräte (30, 32, 34, 36, 38, 40).

16. Drahtloses Endgerät nach Anspruch 15, wobei der Prozessor (402) dazu eingerichtet ist, ein Kalibrierungsverhältnis für jedes Zugangsendgerät der Mehrzahl zu bestimmen und das Kalibrierungsverhältnis basierend auf der Kombination jedes der Kalibrierungsverhältnisse für jedes der Zugangsendgeräte (30, 32, 34, 36, 38, 40) zu bestimmen.

17. Drahtlose Kommunikationsvorrichtung nach Anspruch 16, wobei der Prozessor (402) dazu eingerichtet ist, die Verhältnisse durch Ermitteln jedes der Kalibrierungsverhältnisse zu kombinieren.

18. Drahtlose Kommunikationsvorrichtung nach Anspruch 16, wobei der Prozessor (402) dazu eingerichtet ist, die Verhältnisse durch Normieren jedes Kalibrierungsverhältnisses zu kombinieren und das Kalibrierungsverhältnis basierend auf einer Matrix zu ermitteln, welche jedes der Kalibrierungsverhältnisse umfasst.

19. Drahtlose Kommunikationsvorrichtung nach Anspruch 18, wobei der Prozessor (402) dazu eingerichtet ist, Singulärwert-Dekomposition zu verwenden, um die Matrix zu dekompositionieren, um das Kalibrierungsverhältnis zu erhalten.

20. Drahtlose Kommunikationsvorrichtung nach Anspruch 15, wobei der Prozessor (402) dazu eingerichtet ist, das Kalibierverhältnis unter Verwendung eines gemeinsamen Kalibrierungsverhältnisses zu ermitteln.

21. Drahtlose Kommunikationsvorrichtung nach Anspruch 15, wobei der Prozessor (402) dazu eingerichtet ist, das Kalibrierungsverhältnis durch Lösen der folgenden Gleichung zu ermitteln:

$$\mathbf{g}_{i,k,u} = \gamma_u \cdot e^{-j\omega_i \tau_u} \cdot \mathrm{diag}\left(\mathbf{h}_{i,k,u}\right) \cdot \boldsymbol{\eta} + \mathbf{n}_{i,k,u}$$
$$= \gamma_{i,k,u} \cdot \mathbf{Z}_{i,k,u} \cdot \boldsymbol{\eta} + \mathbf{n}_{i,k,u}$$

wobei $Z_{i,k,u}$ eine diagonale Matrix ist, deren diagonale Elemente die Elemente der Rückwärtsverbindungskanalvektorschätzung $h_{i,k,u}$, sind, $\gamma_{i,u} = \gamma_u e^{-j\omega_i \tau_u}$ und die Subskripte i, k, u, der Ton, die Zeit und die Nutzerindices sind, und wobei η der Kalibrierungsvektor ist, der mit der Sende- und Empfangskette eines Zugangspunkt-Antennenarrays korrespondiert, n der Rauschvektor ist, $g_{i,k,u}$ die Vorwärtsverbindungskanalvektorschätzung ist, $h_{i,k,u}$ die Rückwärtsverbindungskanalvektorschätzung ist, $\gamma_{i,k,u}$ der Zugangsendgerätversatz ist und $\tau_u$ der Taktfehler zwischen dem Zugangspunkt und dem u-ten Zugangsendgerät ist.

22. Drahtlose Kommunikationsvorrichtung nach Anspruch 10, wobei der Prozessor (402) dazu eingerichtet ist, die Gleichung durch Verwenden einer MMSE-Technik zu lösen.

**23.** Drahtlose Kommunikationsvorrichtung nach Anspruch 10, wobei der Prozessor (402) dazu eingerichtet ist, das Kalibrierungsverhältnisses unter Verwendung eines gemeinsamen Optimierungsschemas zu ermitteln mit der Mehrzahl von Vorwärtsverbindungskanalschätzungen und Rückwärtsverbindungskanalschätzungen von der Mehrzahl der Zugangsendgeräte (30, 32, 34, 36, 38, 40).

**Revendications**

**1.** Un procédé de calibration d'un réseau d'antennes (100, 404) dans un réseau sans fil (1) comprenant des cellules multiples pour une technique de transmission par canal duplexé dans le domaine temporel, comprenant :

la réception d'une première information d'estimation de canal correspondant à des transmissions vers un premier terminal d'accès ;
la détermination d'une seconde information d'estimation de canal correspondant à des transmissions provenant du premier terminal d'accès ;
la réception d'une troisième information d'estimation de canal correspondant à des transmissions vers un second terminal d'accès ;
la détermination d'une quatrième information d'estimation de canal correspondant à des transmissions en provenance du second terminal d'accès ; **caractérisé en ce que** le procédé comprend en outre :

la détermination d'un ratio de calibration combiné basé sur les première, seconde, troisième et quatrième informations d'estimation de canal pour au moins les premier et second terminaux d'accès (30, 32, 34, 36, 38, 40) par :

détermination d'un premier ratio de calibration sur la base de la première et de la seconde information d'estimation de canal ;
détermination d'un second ratio de calibration sur la base de la troisième et de la quatrième information d'estimation de canal ;
et détermination du ratio de calibration combiné sur la base d'une combinaison des premier et second ratios de calibration.

**2.** Le procédé de la revendication 1, dans lequel la combinaison comprend le moyennage du premier et du second ratio de calibration.

**3.** Le procédé de la revendication 1, dans lequel le premier et le second ratios de calibration comprennent une pluralité d'éléments correspondant chacun à au moins une antenne (12, 14, 16, 18, 20, 24, 26, 28) d'un point d'accès en communication avec les premier et second terminaux d'accès (30, 32, 34, 36, 38, 40), et dans lequel la combinaison comprend :

la normalisation du premier ratio de calibration ;
la normalisation du second ratio de calibration ;
et la détermination du ratio de calibration combiné sur la base d'une matrice incluant le premier et le second ratio de calibration.

**4.** Le procédé de la revendication 3, dans lequel la détermination du ratio de calibration combiné sur la base de la matrice comprend la décomposition de la matrice en utilisant une décomposition en valeurs singulières.

**5.** Le procédé de la revendication 1, dans lequel la détermination du ratio de calibration combiné comprend la détermination d'un ratio de calibration conjoint basé sur les première, seconde, troisième et quatrième informations d'estimation de canal.

**6.** Le procédé de la revendication 1, dans lequel la détermination du ratio de calibration combiné comprend la résolution de l'équation :

$$\mathbf{g}_{i,k,u} = \gamma_u \cdot e^{-j\omega_i \tau_u} \cdot \mathrm{diag}\big(\mathbf{h}_{i,k,u}\big) \cdot \boldsymbol{\eta} + \mathbf{n}_{i,k,u}$$
$$= \gamma_{i,k,u} \cdot \mathbf{Z}_{i,k,u} \cdot \boldsymbol{\eta} + \mathbf{n}_{i,k,u}$$

où $\mathbf{Z}_{i,k,u}$ est une matrice diagonale dont les éléments diagonaux sont les éléments de l'estimation de vecteur de canal de liaison retour $\mathrm{h}_{i,k,u}$, $\gamma_{i,u} = \gamma_u \cdot e^{-j\omega_i \tau_u}$, et les indices $i$, $k$, $u$ sont les indices de tonalité, de temps et d'utilisateur, respectivement,

et dans lequel $\eta$ est le vecteur de calibration correspondant aux chaînes d'émission et de réception d'un réseau d'antennes de points d'accès, n est le vecteur bruit, $\mathrm{g}_{i,k,u}$ est l'estimation de vecteur de canal de liaison aller, $\mathrm{h}_{i,k,u}$ est l'estimation de vecteur de canal de liaison retour, $\gamma_{i,k,u}$ est le désaccord du terminal d'accès et $\tau_u$ est l'erreur de séquencement entre le point d'accès et le $u$-ième terminal d'accès.

7. Le procédé de la revendication 6, dans lequel la résolution comprend l'utilisation d'une technique MMSE pour résoudre l'équation.

8. Le procédé de la revendication 1, dans lequel la détermination du ratio de calibration combiné comprend l'utilisation d'un schéma d'optimisation conjoint avec les première, seconde, troisième et quatrième information d'estimation de canal.

9. Le procédé de la revendication 1, comprenant en outre :

la réception d'une cinquième information d'estimation de canal correspondant à des transmissions vers un troisième terminal d'accès ;
la détermination d'une sixième information d'estimation de canal correspondant à des transmissions en provenance du troisième terminal d'accès ;
et la détermination d'un ratio de calibration combiné sur la base des première, seconde, troisième, quatrième, cinquième et sixième informations d'estimation de canal pour au moins les premier, second et troisième terminaux d'accès (30, 32, 34, 36, 38, 40).

10. Un dispositif apte à exécuter toutes les étapes de la revendication 1, le dispositif comprenant :

des moyens de réception d'une première information d'estimation de canal correspondant à des transmissions vers un premier terminal d'accès ;
des moyens de détermination d'une seconde information d'estimation de canal correspondant à des transmissions provenant du premier terminal d'accès ;
des moyens de réception d'une troisième information d'estimation de canal correspondant à des transmissions vers un second terminal d'accès ;
des moyens de détermination d'une quatrième information d'estimation de canal correspondant à des transmissions en provenance du second terminal d'accès ;
et des moyens de détermination d'un ratio de calibration combiné basé sur les première, seconde, troisième et quatrième informations d'estimation de canal pour au moins les premier et second terminaux d'accès (30, 32, 34, 36, 38, 40) par :

des moyens de détermination d'un premier ratio de calibration sur la base de la première et de la seconde information d'estimation de canal ;
des moyens de détermination d'un second ratio de calibration sur la base de la troisième et de la quatrième information d'estimation de canal ; et
des moyens de détermination du ratio de calibration combiné sur la base d'une combinaison des premier et second ratios de calibration.

11. Le dispositif de la revendication 10, dans lequel les moyens de combinaison comprennent des moyens de moyennage des différents ratios de calibration.

12. Le dispositif de la revendication 10, dans lequel les différents ratios de calibration comprennent une pluralité d'éléments, et dans lequel les moyens de détermination comprennent :

des moyens de normalisation de chacun des différents ratios de calibration ;
et des moyens de détermination du ratio de calibration sur la base d'une matrice comprenant le premier et le second ratio de calibration.

**13.** Le dispositif de la revendication 10, dans lequel les moyens de détermination du ratio de calibration comprennent des moyens de détermination d'un ratio de calibration conjoint sur la base de la première et de la seconde information d'estimation de canal pour au moins les premier et second terminaux d'accès (30, 32, 34, 36, 38, 40).

**14.** Le dispositif de la revendication 10, dans lequel les moyens de détermination du ratio de calibration comprennent des moyens d'utilisation d'un schéma d'optimisation conjoint avec la première et la seconde information d'estimation de canal pour au moins les premier et second terminaux d'accès (30, 32, 34, 36, 38, 40).

**15.** Le dispositif de la revendication 10, dans lequel le dispositif est un dispositif de communication sans fil comprenant :

au moins deux antennes (12, 14, 16, 18, 20, 24, 26, 28) ; et
un processeur (402) couplé aux au moins deux antennes (12, 14, 16, 18, 20, 24, 26, 28), le processeur (402) étant configuré pour déterminer un ratio de calibration, sur la base d'une pluralité d'estimations de canal de liaison aller et d'estimations de canal de liaison retour à partir d'une pluralité de terminaux d'accès (30, 32, 34, 36, 38, 40), pour communication avec chacun de la pluralité de terminaux d'accès (30, 32, 34, 36, 38, 40).

**16.** Le dispositif de communication sans fil de la revendication 15, dans lequel le processeur (402) est configuré pour déterminer un ratio de calibration pour chaque terminal d'accès de la pluralité et pour déterminer le ratio de calibration sur la base d'une combinaison de chacun des ratios de calibration pour chacun des terminaux d'accès (30, 32, 34, 36, 38, 40).

**17.** Le dispositif de communication sans fil de la revendication 16, dans lequel le processeur (402) est configuré pour combiner les ratios par moyennage de chacun des ratios de calibration.

**18.** Le dispositif de communication sans fil de la revendication 16, dans lequel le processeur (402) est configuré pour combiner les ratios par normalisation de chaque ratio de calibration et pour déterminer le ratio de calibration sur la base d'une matrice comprenant chacun des ratios de calibration.

**19.** Le dispositif de communication sans fil de la revendication 18, dans lequel le processeur (402) est configuré pour utiliser une décomposition en valeurs singulières pour décomposer la matrice afin d'obtenir le ratio de calibration.

**20.** Le dispositif de communication sans fil de la revendication 15, dans lequel le processeur (402) est configuré pour déterminer le ratio de calibration en utilisant un ratio de calibration conjoint.

**21.** Le dispositif de communication sans fil de la revendication 15, dans lequel le processeur (402) est configuré pour déterminer le ratio de calibration par résolution de l'équation :

$$\mathbf{g}_{i,k,u} = \gamma_u \cdot e^{-j\omega_i \tau_u} \cdot \mathrm{diag}\left(\mathbf{h}_{i,k,u}\right) \cdot \mathbf{\eta} + \mathbf{n}_{i,k,u}$$
$$= \gamma_{i,k,u} \cdot \mathbf{Z}_{i,k,u} \cdot \mathbf{\eta} + \mathbf{n}_{i,k,u}$$

où $\mathbf{Z}_{i,k,u}$ est une matrice diagonale dont les éléments diagonaux sont les éléments de l'estimation de vecteur de canal de liaison retour $h_{i,k,u}$, $\gamma_{i,u} = \gamma_u \cdot e^{-j\omega_i \tau_u}$, et les indices *i, k, u* sont les indices de tonalité, de temps et d'utilisateur, respectivement,
et dans lequel η est le vecteur de calibration correspondant aux chaînes d'émission et de réception d'un réseau d'antennes de points d'accès, n est le vecteur bruit, $g_{i,k,u}$ est l'estimation de vecteur de canal de liaison aller, $h_{i,k,u}$ est l'estimation de vecteur de canal de liaison retour, $\gamma_{i,k,u}$ est le désaccord du terminal d'accès et $\tau_u$ est l'erreur de séquencement entre le point d'accès et le *u*-ième terminal d'accès.

22. Le dispositif de communication sans fil de la revendication 10, dans lequel le processeur (402) est configuré pour résoudre l'équation par utilisation d'une technique MMSE.

23. Le dispositif de communication sans fil de la revendication 10, dans lequel le processeur (402) est configuré pour déterminer le ratio de calibration par utilisation d'un schéma d'optimisation conjoint avec la pluralité d'estimations de canal de liaison aller et d'estimations de canal de liaison retour en provenance de la pluralité de terminaux d'accès (30, 32, 34, 36, 38, 40).

FIG. 1

EP 1 875 632 B1

EP 1 875 632 B1

**FIG. 2**

EP 1 875 632 B1

EK OGX Eq 1 d

@O O bj ds Cdbncd % Rbgdct kmf SH d

@O Oqnbdrr SH d9

@O

Qfns

Gno 0

Qfns

Gno 1

EK
O
bj
ds

EK
O
bj
ds

QK
O
bj
ds

QK
O
bj
ds

@S

@
B
J

@S O bj ds Cdbncd

Qfns

,7

Gno 0

Gno 1

Gno 2

@
B
J

QK OGX Eq 1 d

**FIG. 3**

— 300

— 302

```
┌─────────────────────────────────────────────┐
│  CALIBRATION COMPONENT                       │
│                                              │
│   ┌──────────────────────────────┐           │
│   │         MISMATCH             │           │
│   │        ESTIMATOR             │           │
│   │           304                │           │
│   └──────────────────────────────┘           │
│                  ↕                            │
│   ┌──────────────────────────────┐           │
│   │          RATIO               │           │
│   │       AGGREGATION            │           │
│   │       CALCULATOR             │           │
│   │           306                │           │
│   └──────────────────────────────┘           │
│                                              │
└─────────────────────────────────────────────┘
```

# FIG. 4

400

408

MEMORY

402

PROCESSOR

CALIBRATION
COMPONENT

406

ANTENNA ARRAY

404

# FIG. 5

```
                         ┌─────────────────┐
                         │      Start      │
                         └─────────────────┘
                                  │
                  ┌───────────────┴───────────────┐
                  ▼                               ▼
      ┌───────────────────────┐      ┌───────────────────────┐
      │ Receive Channel Estimates │   │ Determine Reverse Link │    502
500   │ For Forward Link From Access │ │  Channel Estimates     │
      │       Terminal         │      └───────────────────────┘
      └───────────────────────┘
                  └───────────────┬───────────────┘
                                  ▼
                      ┌───────────────────────┐
                      │ Determine Calibration Ratios │   504
                      └───────────────────────┘
                                  │
                                  ▼
                      ┌───────────────────────┐
                      │   Determine Combined   │
                      │   Calibration Ratio    │   506
                      └───────────────────────┘
                                  │
                                  ▼
                      ┌───────────────────────┐
                      │ Apply Calibration Ratio To │
                      │ Transmission Weights For   │   508
                      │     Transmission        │
                      └───────────────────────┘
                                  │
                                  ▼
                         ┌─────────────────┐
                         │      End        │
                         └─────────────────┘
```

FIG. 6

27

Start

Receive Channel Estimates For Forward Link From Access Terminal — 600

Determine Reverse Link Channel Estimates — 602

Determine Calibration Ratio For Joint Reverse Link And Forward Link Estimates Of Multiple Access Terminals — 604

FIG. 7

Apply Calibration Ratio To Transmission Weights For Transmission — 608

End

FIG. 8

ACCESS POINT 1400

Main Unit (1450)

IF Processing Unit 1410

Baseband component 1405

Multiplexer 1484

A/D Converter 1415

Radio Unit (1475)

Transmitter 1420

Receiver 1430

Central Processor 1480

A/D Converter 1425

Power Amplifier 1482t

Antenna 1435t

Antenna 1435a

Power Amplifier 1482a

FIG. 9

FIG. 10

```
                        ┌──────────────────┐
                        │      Start       │
                        └──────────────────┘
                                 │
                                 ▼
                    ╱╲
                   ╱  ╲
                  ╱    ╲
                 ╱ Determine Transmission ╲  ┌1500
                ╱ Interval Since Last Calibration ╲
                ╲ Ratio For Current AGC ╱
                 ╲    State    ╱
                  ╲          ╱
                   ╲        ╱
                    ╲      ╱
```

t > τ                              t < τ

┌─────────────────┐  ┌──────────────┐     ┌──────────────────┐
│     Receive     │  │              │     │  Access Stored   │
│     Channel     │  │  Determine   │     │   Calibration    │
│  Estimates For  │  │ Reverse Link │┌1504 │    Ratio For     │┌1512
│  Forward Link   │  │   Channel    │     │   Current AGC    │
│   From Access   │  │  Estimates   │     │      State       │
│    Terminal     │  │              │     │                  │
└─────────────────┘  └──────────────┘     └──────────────────┘
  1502┘
         │              │
         └──────┬───────┘
                ▼
      ┌─────────────────────────┐
      │ Determine Calibration Ratios │┌1506
      └─────────────────────────┘
                │
                ▼
      ┌─────────────────────┐
      │   Determine Combined │
      │   Calibration Ratio  │┌1508
      └─────────────────────┘
                │
                └──────────┬─────────────────┘
                           ▼
              ┌──────────────────────────────┐
              │  Apply Calibration Ratio To  │
              │  Transmission Weights For    │┌1510
              │  Transmission On The AGC     │
              │           State              │
              └──────────────────────────────┘
                           │
                           ▼
                  ┌──────────────────┐
                  │       End        │
                  └──────────────────┘
```

**EP 1 875 632 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 67419005 P
- US 69145805 P
- US 733020 P
- WO 9957820 A1
- US 260895 A